# EUROPÄISCHE PATENTSCHRIFT

(11) **EP 4 200 748 B1**
(45) Veröffentlichungstag und Bekanntmachung des Hinweises auf die Patenterteilung: **28.10.2026**
(21) Anmeldenummer: 21770124.2
(22) Anmeldetag: 23.08.2021
(51) Int. Cl.: G06K 19/077

(54) **TRANSPONDERKAPPE**
TRANSPONDER CAP
CAPUCHON DE TRANSPONDEUR

(30) Priorität: 24.08.2020 DE 102020122072
(43) Veröffentlichungstag der Anmeldung: 28.06.2023
(73) Patentinhaber: Neosid Pemetzrieder Gmbh & Co. Kg, 58553 Halver (DE)
(72) Erfinder: KURPIERZ, Norbert, 58553 Halver (DE); HÖSS, Matthias, 58553 Halver (DE)
(74) Vertreter: Feder Walter Ebert
(86) Internationale Anmeldenummer: PCT/DE2021/100708
(87) Internationale Veröffentlichungsnummer: WO 2022/042795

(56) Entgegenhaltungen:
- DE-A1- 19 710 656
- DE-A1- 19 962 077
- DE-U1- 20 008 705
- DE-U1- 212010 000 083
- US-A- 4 742 470
- US-A1- 2003 156 033
- US-A1- 2004 052 034
- US-A1- 2004 233 042
- US-A1- 2006 022 056
- US-A1- 2013 057 387
- US-A1- 2017 228 627

## Beschreibung

Die Erfindung betrifft eine Transponderkappe zur Befestigung eines Transponders an einem Objekt, insbesondere an einem rotierbaren Werkzeug, mit einem Gehäuse und einem mit dem Gehäuse vergossenen Transponder mit Transponderspule. Ferner betrifft die Erfindung ein Verfahren zur Herstellung einer Transponderkappe mit einem Gehäuse und einem Transponder mit Transponderspule, welcher mit dem Gehäuse vergossen wird. Weiterer Gegenstand der Erfindung ist ein Werkzeug zum rotierenden Bearbeiten mit einem Werkzeugende, insbesondere zum Einspannen in eine Antriebsmaschine.

Transponder, insbesondere RFID-Transponder, werden in vielen Bereichen der Technik zur Kennzeichnung von Objekten eingesetzt. So werden beispielsweise, wie in der DE 10 2005 058 881 A1 beschrieben, medizinische Instrumente mit Transpondern ausgestattet, um bestimmte instrumentenspezifische Daten auf diesen zu hinterlegen und die Instrumente entsprechend zu kennzeichnen.

Zum Auslesen des Transponders und zum Beschreiben des Transponders weisen diese eine Transponderspule auf, welche als Antenne fungiert. Durch die Transponderspule können entsprechend Daten von und an den Transponder übertragen werden.

Zur Befestigung des Transponders an dem zu kennzeichnenden Objekt sind unterschiedliche Befestigungsmittel bekannt, deren Ausgestaltung häufig an das jeweilige Objekt angepasst sind. So betrifft beispielsweise die DE 10 2012 104 409 A1 ein Befestigungsgehäuse für einen RFID-Transponder, in welches der Transponder, welcher zuvor in einem separaten Fertigungsschritt um einen Wickelkörper gewickelt wurde, eingeklebt und daraufhin in ein Bohrloch des Objekts eingedrückt wird.

Weitere mögliche Transponderausgestaltungen zeigen beispielsweise die US 2004/0052034 A1, die US 2017/0228627 A1, die DE 200 08 705 U1, die US 2004/0233042 A1 oder die DE 199 62 077 A1.

Eine andere Befestigungsmöglichkeit wäre eine Transponderkappe, die auf das zu kennzeichnende Objekt aufgesteckt oder aufgeschraubt werden kann. Diese kann ein Gehäuse aufweisen, in welchem ein Transponder angeordnet ist. Der Transponder kann hierbei fest mit dem Gehäuse vergossen sein, damit dieser entsprechend ortsfest am Gehäuse verbleibt, beispielsweise um auch bewegbare Objekte kennzeichnen zu können. Ein Verrutschen des Transponders innerhalb des Gehäuses wird dadurch vermieden.

Es können Herausforderungen bei der Fertigung entstehen. Beispielsweise gibt es Anwendungen, bei denen das Aufstecken der Transponderkappe sehr präzise erfolgen muss, weshalb nur geringe Toleranzen bei der Fertigung akzeptabel sind. Insbesondere beim Vergießen des Transponders können diese Fertigungstoleranzen jedoch häufig nicht zuverlässig erfüllt werden.

Es können z. B. Luftblasen, insbesondere im Bereich der Transponderspule, mit vergossen werden, wodurch das eingenommene Volumen an Vergussmasse auch bei vordefinierter Menge an Vergussmasse stark variieren kann, weshalb Fertigungstoleranzen hinsichtlich der Füllhöhe nicht immer eingehalten werden können und Ausschussware hergestellt wird. Dies kann vor allem bei sehr kleinen Volumina an Vergussmasse problematisch sein.

Der Erfindung liegt daher die **Aufgabe** zugrunde, eine Transponderkappe zu schaffen, welche sich durch besonders geringe Fertigungstoleranzen auszeichnet.

Diese Aufgabe wird durch die Merkmale der unabhängigen Ansprüche **gelöst**.

Durch die Anordnung der Transponderspule um den Zapfen als Teil des Gehäuses werden besonders geringe Fertigungstoleranzen der Transponderkappe ermöglicht. Die Transponderspule ist um den Zapfen angeordnet, weshalb der Transponder entsprechend innerhalb des Gehäuses ausgerichtet ist. Durch die Anordnung der Transponderspule um den Zapfen ist das Gießvolumen zum Vergießen des Transponders mit dem Gehäuse reduziert. Durch die Ausrichtung des Transponders innerhalb des Gehäuses und durch das reduzierte Gießvolumen werden Einschlüsse, wie insbesondere Lufteinschlüsse und/oder Blasen, während des Vergießens des Transponders mit dem Gehäuse deutlich verringert, weshalb geringe Fertigungstoleranzen einhaltbar sind. Durch die Erfindung kann daher eine höhere Prozessstabilität erreicht werden.

Bevorzugt ist die Transponderkappe zum Aufstecken, insbesondere aufgepresst, und/oder Aufschrauben auf ein Objekt ausgebildet. Das Objekt kann hierfür einen Befestigungsbereich aufweisen, der beispielsweise stiftförmig, mit oder ohne Gewinde, ausgebildet sein kann. Die Transponderkappe kann allerdings auch zum Einstecken, insbesondere Einpressen, und/oder Einschrauben in das Objekt ausgebildet sein. Das Objekt kann hierfür einen Befestigungsbereich aufweisen, der beispielsweise lochförmig, mit oder ohne Gewinde, ausgebildet sein kann.

Ein wesentlicher Grundgedanke der Erfindung liegt darin, dass der Zapfen einen Hohlraum in der Transponderspule ausfüllen kann. Hierdurch können beim Vergießen des Transponders mit dem Gehäuse eingekapselte Hohlräume vermieden werden. Es ist möglich, dass die Transponderspule als Luftspule ausgestaltet ist. Die Transponderspule, insbesondere die als Luftspule ausgestaltete Transponderspule, kann kernlos sein. Durch die kernlose Ausgestaltung kann der Hohlraum in der Transponderspule gebildet werden.

Erfindungsgemäß ist das Gehäuse als Gießform ausgestaltet. Hierdurch kann der Transponder nach Anordnung innerhalb des Gehäuses ohne zusätzliche Fertigungsschritte vergossen werden. Das Gehäuse weist einen Boden zum Abschließen des Gehäuses auf. Der Boden kann als kreisrunder Boden ausgestaltet sein. Insbesondere für den Fall, dass die Transponderspule einen kreisrunden Querschnitt aufweist, kann so der Bauraum des Gehäuses vorteilhaft genutzt werden. Ferner ist es möglich, dass das Gehäuse eine zum Boden korrespondierende Öffnung zur Aufnahme des Transponders aufweist. Durch die Öffnung kann der Transponder ohne großen Montageaufwand in dem Gehäuse angeordnet werden.

Eine vorteilhafte Ausgestaltung der Erfindung sieht ferner vor, dass das Gehäuse als Hohlzylinder ausgestaltet ist. Erfindungsgemäß ist vorgesehen, dass das Gehäuse als einseitig offener Hohlzylinder ausgestaltet ist. Es ist möglich, dass der Durchmesser über die Höhe des Gehäuses variiert, wodurch Anpassungen, beispielsweise an den Transponder oder den verfügbaren Bauraum, konstruktiv einfach ermöglicht werden.

Ferner hat es sich als vorteilhaft herausgestellt, dass das Gehäuse um eine Hauptachse im Wesentlichen rotationssymmetrisch ausgestaltet ist. Dies kann insbesondere die Kennzeichnung von rotierenden Objekten, insbesondere rotierenden Werkzeugen, ermöglichen, ohne diese funktional einzuschränken. Eine Rotationssymmetrie ist aber nicht zwingend erforderlich.

Eine konstruktiv besonders vorteilhafte Ausgestaltung sieht ferner vor, dass das Gehäuse einstückig ausgestaltet ist. Die einstückige Ausgestaltung reduziert die Anzahl an Fertigungsschritten, da ein Zusammenbau des Gehäuses aus mehreren Einzelteilen entfallen kann. Erfindungsgemäß besteht das Gehäuse aus Kunststoff, insbesondere aus Thermoplaste.

In Weiterbildung der Erfindung wird ferner vorgeschlagen, dass das Gehäuse einen Befestigungsbereich und/oder einen Vergussbereich aufweist. Der Vergussbereich kann hierbei der Bereich des Gehäuses sein, der mit Vergussmasse gefüllt wird. Der Befestigungsbereich kann zur Befestigung des Gehäuses am zu kennzeichnenden Objekt dienen. Der Befestigungsbereich kann frei von Vergussmasse sein. Durch den Befestigungsbereich kann die Transponderkappe auf konstruktiv einfache Art und Weise an dem Objekt befestigt werden. Ferner ist es ebenso möglich, dass der Befestigungsbereich zum Aufschrauben auf das Objekt ein Gewinde, insbesondere ein Innengewinde, aufweist. Es ist möglich, dass nach Anordnung der Vergussmasse in dem Vergussbereich der Befestigungsbereich in axialer Richtung über die Vergussmasse übersteht.

Es wird ferner vorgeschlagen, dass der Zapfen kegelförmig ausgestaltet ist. Diese Ausgestaltung erhöht die Montagefreundlichkeit, da die Transponderspule um den kegelförmig ausgestalteten Zapfen besonders einfach angeordnet werden kann.

Es ist zur Anordnung der Transponderspule an dem Zapfen besonders vorteilhaft, wenn der Zapfen korrespondierend zur Transponderspule ausgestaltet ist. Hierbei kann der Zapfen in Bezug auf dessen Durchmesser korrespondierend zur Transponderspule ausgestaltet sein. Erfindungsgemäß ist weiter vorgesehen, dass die Transponderspule auf den Zapfen gesteckt ist. Ebenso ist es möglich, dass der Zapfen in Bezug auf dessen Höhe korrespondierend zur Transponderspule ausgestaltet ist. Der Zapfen kann im Wesentlichen die gleiche Höhe aufweisen wie die Transponderspule. So ist es möglich, dass die Transponderspule um den Zapfen anordbar ist und sich die Transponderspule über die volle Höhe des Zapfens erstreckt. Der Zapfen kann auch höher sein als die Spule. Dann liegt diese nicht auf dem Boden des Gehäuses der Transponderkappe auf, sondern bildet einen Spalt zum Boden. Mit der Länge des Zapfens kann somit die Höhenlage der Transponderspule in dem Gehäuse eingestellt werden.

Es hat sich ferner als vorteilhaft herausgestellt, wenn eine Unwucht der Transponderkappe vermieden wird. Bevorzugt ist der Zapfen zur Zentrierung der Transponderspule im Gehäuse koaxial zur Hauptachse des Gehäuses angeordnet. Der Zapfen kann ebenso als Mitteldorn ausgestaltet sein. Der Zapfen kann zentrisch am Boden angeordnet sein. Hierdurch kann der Vorteil erreicht werden, dass eine Unwucht vermieden wird, was insbesondere bei schnell rotierenden Werkzeugen relevant ist. Die Unwucht kann insbesondere dadurch entstehen, dass die im Wesentlichen metallische Spule, die aus einem anderen Material als die im Wesentlichen nicht metallische Vergussmasse besteht, außermittig liegt. Ob eine Unwucht noch tolerierbar ist, hängt von mehreren Parametern ab, wie der Höhe der Objekt-Drehzahl, der Empfindlichkeit des Systems und der Dichteunterschiede der Materialien, wie beispielsweise der Dichte einer Kupferspule von ca. 8.900kg/m³ zur Dichte einer Vergussmasse von ca. 1.100kg/m³.

Erfindungsgemäß ist weiter vorgesehen, dass der Zapfen an dem Boden angeordnet ist. Eine derartige Anordnung ist insbesondere von Vorteil, wenn der Zapfen der Öffnung gegenüberliegend angeordnet ist, denn so kann die Anordnung der um den Zapfen anzuordnenden Transponderspule vereinfacht werden. Es ist möglich, dass der Zapfen senkrecht zum Boden orientiert ist.

Bei einer erfindungsgemäßen Transponderkappe hat es sich in funktionaler Hinsicht als vorteilhaft herausgestellt, wenn der Transponder einen integrierten Schaltkreis aufweist. Der Transponder kann als passiver Transponder, insbesondere als passiver RFID-Transponder, ausgestaltet sein. Der integrierte Schaltkreis des Transponders kann zum Hinterlegen von Daten dienen und zusammen mit der Transponderspule das Auslesen und/oder Einlesen von Daten ermöglichen.

Der Transponder kann über eine Vergussmasse, insbesondere ein Kunststoff und/oder ein Klebstoff, mit dem Gehäuse vergossen, insbesondere verklebt, sein. Als Vergussmasse können alle Materialen in Frage kommen, die flüssig in das Gehäuse eingebracht werden und sodann zur Befestigung der Transponderspule an dem Zapfen im Gehäuse aushärten. Die Vergussmasse kann auch materialgleich zum Gehäuse gewählt sein.

Die Vergussmasse sollte den Transponder vollständig umschließen. Es ist aber auch möglich, dass der Transponder nicht vollständig von der Vergussmasse umschlossen ist. Der Transponder kann als Inlay in das Gehäuse eingesetzt und dann vergossen werden.

Es ist vorteilhaft, wenn eine vordefinierte Menge an Vergussmasse, insbesondere bezüglich des Volumens oder der Masse, verwendet wird. Hierdurch können die Fertigungstoleranzen ohne aufwendige Messtechniken eingehalten werden.

Im Zusammenhang mit der Ausgestaltung der Vergussmasse ist es ferner von Vorteil, wenn die Vergussmasse sich nur zum Teil, insbesondere über höchstens drei Viertel, bevorzugt über höchstens zwei Drittel, besondere bevorzugt über höchstens die Hälfte, über eine Höhe des Gehäuses erstreckt. Sie kann sich auch höchstens über ein Viertel oder ein Fünftel über eine Höhe des Gehäuses erstrecken. Die Höhe der Teilerstreckung hängt auch von Gegebenheiten des jeweiligen Werkzeugs und insbesondere von dem freien Befestigungsbereich des Werkzeugs ab.

Durch die Teilerstreckung der Vergussmasse im Gehäuse kann im Gehäuse ein Freiraum entstehen, der den Befestigungsbereich der Transponderkappe bilden kann. Dieser Freiraum kann beispielsweise einen stiftförmigen Befestigungsbereich des Objekts aufnehmen, so dass die Transponderkappe am Objekt befestigbar ist.

Das Gehäuse kann auch vollständig mit der Vergussmasse gefüllt sein, so dass kein Freiraum entsteht. Dies eignet sich insbesondere für eine einsteckbare und/oder einschraubbare Transponderkappe.

Neben der erfindungsgemäßen Transponderkappe wird darüber hinaus bei einem Werkzeug zum rotierenden Bearbeiten mit einem Werkzeugende, insbesondere zum Einspannen in eine Antriebsmaschine, zur **Lösung** der vorstehend genannten Aufgabe vorgeschlagen, dass das Werkzeug eine, insbesondere aufgesteckte oder aufgeschraubte oder eingesteckte oder eingeschraubte, Transponderkappe mit einem oder mehreren der vorstehend genannten Merkmale aufweist. Es ergeben sich die im Zusammenhang mit der Transponderkappe erläuterten Vorteile. Das Werkzeug kann im Wesentlichen rotationssymmetrisch sein. Das Befestigen der Transponderkappe kann an einer axialen Stirnseite des Werkzeugs erfolgen.

Es ist ferner vorteilhaft, wenn eine vordefinierte Menge an Vergussmasse vergossen wird.

Es hat sich ferner bewährt, wenn die Transponderkappe an einem Objekt, insbesondere an einem rotierbaren Werkzeug, befestigt, insbesondere aufgesteckt oder aufgeschraubt, wird. Es ist möglich, die befestigte Transponderkappe auf das Objekt aufzupressen. Ferner kann die Transponderkappe an einem Objekt, insbesondere an einem rotierbaren Werkzeug, durch Einstecken, insbesondere Einpressen oder Einschrauben, befestigt werden.

Weitere Einzelheiten und Vorteile erfindungsgemäßer Transponderkappen werden nachfolgend unter Zuhilfenahme von in den Figuren dargestellten Ausführungsbeispielen erläutert. Darin zeigen:
- Fig. 1a, 1b: eine Transponderkappe vor und nach Befestigung an einem Objekt in perspektivischer Ansicht,
- Fig. 2a bis 2d: die Transponderkappe gemäß Fig. 1a, b in verschiedenen Zuständen in einer Schnittdarstellung,
- Fig. 3: ein weiteres Ausführungsbeispiel einer Transponderkappe, insbesondere zum Einpressen in ein zu kennzeichnendes Objekt, in perspektivischer Ansicht und
- Fig. 4a bis 4c: die Transponderkappe gemäß Fig. 3 in verschiedenen Zuständen in einer Schnittdarstellung.

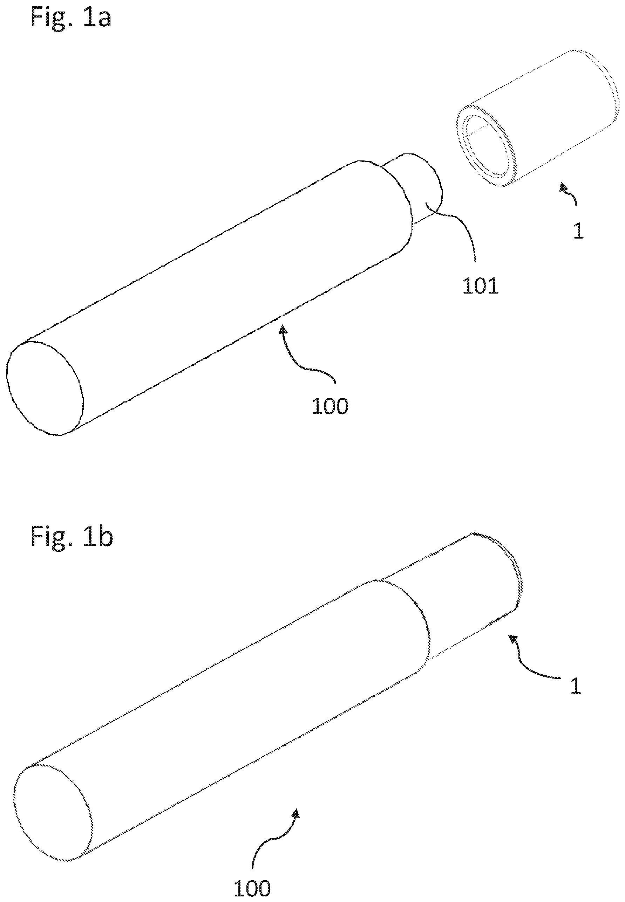

Die in den Fig. 1a und 1b dargestellte Transponderkappe 1 eignet sich zur Befestigung eines Transponders 3 an einem rotierbaren Werkzeug 100. Auf dem Transponder 3 lassen sich verschiedene Arten von Daten hinterlegen, welche das Werkzeug 100 entsprechend kennzeichnen können. Die erfindungsgemäße Transponderkappe 1 ist jedoch keineswegs auf rotierbare Werkzeuge 100 beschränkt, sondern kann in vielen verschiedenen Bereichen der Technik zur Befestigung eines Transponders 3 an einem Objekt eingesetzt werden.

Gemäß Fig. 1 weist das Werkzeug 100 ein freies Werkzeugende 101 auf. Bei dem Werkzeug 100 handelt es sich um ein rotierendes Bearbeitungswerkzeug, beispielsweise zum Honen, Fräsen, Schleifen, Polieren oder Wickeln. Das Werkzeug kann in verschiedenen Bereichen eingesetzt werden, beispielsweise bei industriellen Anwendungen, medizinischen Geräten oder der Textiltechnik.

Das Werkzeug 100 ist im Wesentlichen rotationssymmetrisch. Das freie Werkzeugende 101 ist stiftförmig ausgebildet. Es befindet sich an einer axialen Stirnseite des Werkzeugs 100. Das Werkzeug 100 kann in eine nicht dargestellte Antriebsmaschine eingespannt werden, welche das Werkzeug 100 zum Bearbeiten eines Werkstücks in Rotation versetzen kann.

Das Werkzeug 100 weist verhältnismäßig kleine Abmaße auf, weshalb zum Funktionserhalt des Werkzeugs 100 auch die Transponderkappe 1 entsprechend klein ausgestaltet ist.

Die Transponderkappe 1 ist korrespondierend zu dem Werkzeugende 101 ausgestaltet und kann so ohne großen Montageaufwand am Werkzeug 100 steckend befestigt werden, vgl. Fig. 1b. Zusätzlich ist es möglich, dass die auf dem Werkzeugende 101 aufgesteckte Transponderkappe 1 aufgepresst wird, um so die Befestigung am Werkzeug 100 zu festigen. Alternativ zu der steckbaren Verbindung ist es ebenso möglich, die Transponderkappe 1 mit einem Gewinde auszugestalten, so dass diese auf ein entsprechendes Gegengewinde am Werkzeug 100 aufschraubbar wäre. In nicht dargestellter Weise kann die Transponderkappe 1 als Plug auch in eine Aufnahme, beispielsweise ein Loch, am Werkzeugende 101 des Werkzeugs 100 eingesteckt, eingepresst oder eingeschraubt werden. Vorteilhaft bilden das Werkzeug und die Transponderkappe eine im Wesentlichen rotationssymmetrische Einheit.

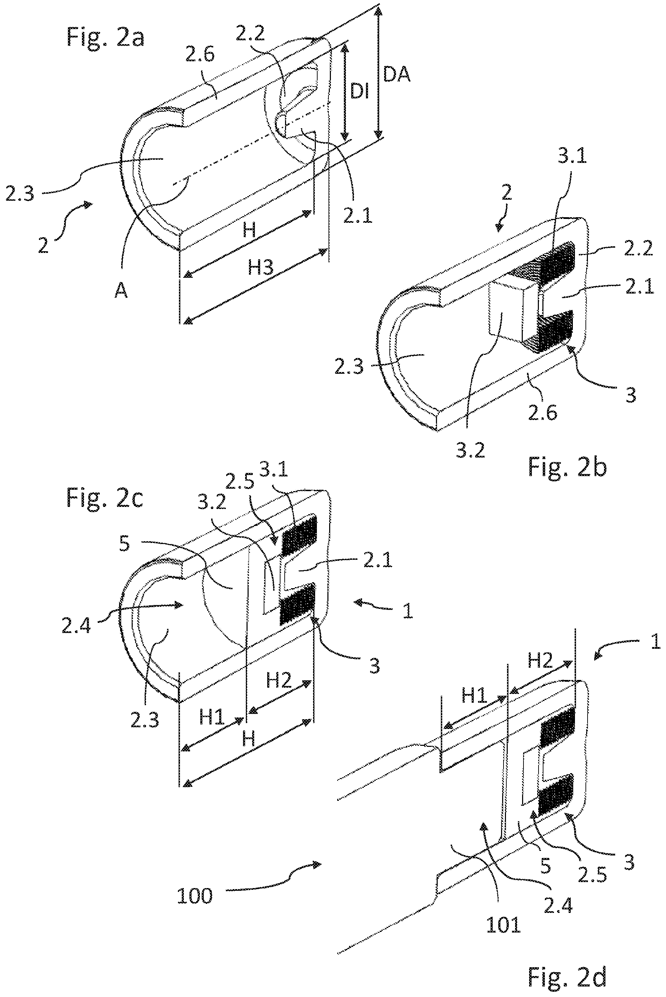

Die Fig. 2a bis 2d stellen zur Erläuterung des Aufbaus und der Herstellung der Transponderkappe 1 deren Bestandteile in mehreren Schnittdarstellungen dar. Die Fig. 2c stellt hierbei die fertige Transponderkappe 1 dar.

In Fig. 2a ist ein als einseitig geschlossener Hohlzylinder ausgebildetes Gehäuse 2 dargestellt. Das Gehäuse 2 weist einen Innendurchmesser DI und einen Außendurchmesser DA und eine Innenhöhe H auf. Ferner weist das Gehäuse 2 eine Außenhöhe H3 auf. Die Außenhöhe H3 resultiert aus der Innenhöhe H und der Dicke eines Bodens 2.2. Das Gehäuse 2 ist um eine Hauptachse A rotationssymmetrisch ausgestaltet. Das Gehäuse 2 weist eine kreisrunde Öffnung 2.3 und gegenüber liegend angeordnet den kreisrunden Boden 2.2 auf. Die Öffnung 2.3 und der Boden 2.2 sind an den Stirnseiten des Hohlzylinders angeordnet. Das Gehäuse 2 weist ferner einen Mantel 2.6 auf, welcher zusammen mit der Öffnung 2.3 und dem Boden 2.2 eine topfförmige Gestalt des Gehäuses 2 ausbildet. Das Gehäuse 2 ist insofern als eine Art Vergusshaube oder Gießform ausgestaltet. Der Boden 2.2 und der Mantel 2.6 bilden eine Art Grundkörper des Gehäuses 2 aus. Das Gehäuse 2 ist aus Kunststoff gefertigt. Am Boden 2.2 ist ein sich orthogonal zum Boden 2.2 erstreckender Zapfen 2.1 angeordnet. Der Zapfen 2.1 ist als Mitteldorn ausgestaltet und ermöglicht eine zentrale Ausrichtung einer Transponderspule 3.1. Der Zapfen 2.1 ist kegelförmig ausgebildet und verläuft koaxial zu einer Hauptachse A des Gehäuses 2. Der Zapfen 2.1 kann ebenso zylinderförmig ausgestaltet werden, wobei sich die kegelförmige Ausgestaltung bei der Anordnung der Transponderspule 3.1 besonders bewährt hat.

Das Gehäuse 2 des Ausführungsbeispiels gemäß Fig. 2a ist einstückig ausgestaltet. Der Zapfen 2.1 und der Boden 2.2 sind daher direkt miteinander unlösbar verbunden. Eine einstückige Ausgestaltung des Gehäuses 2 kann, beispielsweise durch ein Spritzgussverfahren, insbesondere Kunststoffspritzguss, ermöglicht werden, indem das Gehäuse 2 direkt in die gewünschte Form gespritzt wird. Andere Verfahren, wie beispielsweise formgebende Verfahren in mechanischer Bearbeitung, sind ebenso denkbar. Das Gehäuse 2 kann ebenso mehrteilig ausgestaltet sein.

In dem Gehäuse 2 ist der Transponder 3 schützend aufgenommen, vgl. Fig. 2b. Hierfür ist die Transponderspule 3.1 um den Zapfen 2.1 angeordnet, indem der Transponder 3 mit der Transponderspule 3.1 durch die Öffnung 2.3 eingeschoben ist. Bei der Transponderspule 3.1 handelt es sich um eine Luftspule. Diese ist kernlos. Sie weist im Inneren einen zylindrischen Hohlraum auf. Die Transponderspule 3.1 ist daher um den Zapfen 2.1 anordbar, indem der Zapfen 2.1 in dem zylindrischen Hohlraum der Luftspule angeordnet wird. Der Zapfen 2.1 ist hinsichtlich des Durchmessers und der Höhe korrespondierend zu der Transponderspule 3.1 ausgestaltet. Durch die Anordnung der Transponderspule 3.1 um den Zapfen 2.1 wird das Gießvolumen innerhalb des Gehäuses 2 reduziert, da der Zapfen 2.1 das Volumen, insbesondere den zylindrischen Hohlraum, innerhalb der Transponderspule 3.1 einnimmt. Die Transponderspule 3.1 ist an dem Zapfen 2.1 klemmend befestigt, sie kann alternativ oder zusätzlich jedoch auch verrastet sein oder nur lose um den Zapfen 2.1 angeordnet werden.

Ein integrierter Schaltkreis 3.2 des Transponders 3 ist innerhalb des Gehäuses 2 zur Öffnung 2.3 hin orientiert. Die Transponderspule 3.1 ist zum Boden 2.2 hin orientiert, wobei die Transponderspule 3.1 auf diesem aufliegt. Der Transponder 3 kann als passiver oder aktiver RFID-Transponder ausgestaltet sein.

Fig. 2c stellt die erfindungsgemäße Transponderkappe 1 dar. Zur ortsfesten Anordnung des Transponders 3 im Gehäuse 2 ist der Transponder 3 mit dem Gehäuse 2 vergossen. Hierfür weist das Gehäuse 2 einen Vergussbereich 2.5 auf, in welchem eine Vergussmasse 5 angeordnet ist. Der Transponder 3 mit der Transponderspule 3.1 ist in dem Vergussbereich 2.5 angeordnet, weshalb die Vergussmasse 5 den Transponder 3 umschließt. Die Vergussmasse 5 kann beispielsweise aus Kunststoff, insbesondere Duroplaste, oder Klebstoff bestehen. Die Vergussmasse kann in das Gehäuse eingegossen oder eingespritzt werden.

Neben dem Vergussbereich 2.5 weist das Gehäuse 2 darüber hinaus einen Befestigungsbereich 2.4 auf, welcher vergussmassenfrei ausgestaltet ist. Der Befestigungsbereich 2.4 ermöglicht die Befestigung des Transponders 3 an dem Werkzeug 100, vgl. Fig. 1b und 2d. Gemäß Fig. 2c ist der Befestigungsbereich 2.4 nach Art eines Überstands als kragenförmiger Aufsteckbereich ausgebildet, weshalb die Transponderkappe 1 steckend an dem Werkzeug 100 befestigbar ist. Der Aufsteckbereich lässt sich aufgrund der Klemmwirkung an dem Werkzeug 100 befestigen. Alternativ hierzu ist es jedoch ebenso möglich, dass der Befestigungsbereich 2.4 nach Art eines Gewindes ausgestaltet und entsprechend schraubbar an dem Werkzeug 100 befestigbar ist.

In Fig. 2d ist das Werkzeug 100 mit der am Werkzeugende 101 befestigten Transponderkappe 1 dargestellt. Zur Befestigung ist das Werkzeugende 101 in dem Befestigungsbereich 2.4 aufgenommen. Die Transponderkappe 1 ist korrespondierend zu dem Werkzeugende 101 des Werkzeugs 100 ausgestaltet.

Es ist ersichtlich, dass der Befestigungsbereich 2.4 derart ausgestaltet ist, dass das gesamte Werkzeugende 101 in diesem aufgenommen ist. Hierfür weist der Befestigungsbereich 2.4 eine bestimmte Höhe H1 auf. Die Höhe H1 entspricht der vergussfreien Höhe, welche nach dem Vergießen keine Vergussmasse 5 aufweist. Die Höhe H1 ergibt sich konstruktionsbedingt aus einer Höhe H2 des Vergussbereichs 2.5. Die Höhe H2 entspricht der Vergusshöhe, welche nach dem Vergießen Vergussmasse 5 aufweist. Würde der Vergussbereich 2.5 des Ausführungsbeispiels beispielsweise eine bestimmte Höhe H2 überschreiten, so könnte bei gleichbleibender Innenhöhe H des Gehäuses 3 nicht mehr das gesamte Werkzeugende 101 in dem Befestigungsbereich 2.4 aufgenommen werden. Je nach Anwendungsfall ist es möglich, dass das Werkzeug 100 mit Transponderkappe 1 dann eine Gesamtlänge überschreiten würde und so nicht mehr in eine Antriebsmaschine einspannbar wäre. Aus diesem Grund sind bei der Fertigung der Transponderkappe 1 besonders geringe Toleranzen einzuhalten.

Zur Befestigung der Transponderkappe 1 an dem Werkzeug 100 ist es von Vorteil, wenn die Höhe H1 des Befestigungsbereichs 2.4 groß genug ist, um eine ausreichende Aufsteckbefestigung zu ermöglichen. Gleichzeitig ist jedoch sinnvoll, dass der Transponder 3 vollständig von Vergussmasse 5 umschlossen ist und eine bestimmte Höhe H2 des Vergussbereichs 2.5 nicht unterschritten wird. Die Höhe H2 entspricht der Füllhöhe der Vergussmasse 5. Es hat sich bewährt, wenn die Höhe H2 zwei bis ein Drittel der Innenhöhe H des Gehäuses 2 einnimmt. Alternative Höhen H, H1, H2 sind jedoch ebenso möglich.

Die Einhaltung der Fertigungstoleranzen ist bei der Transponderkappe 1 maßgeblich vom Vergießen des Gehäuses 2 und der Transponders 3 abhängig, vgl. Fig. 2b zu 2c. Gemäß Fig. 2b ist die Transponderspule 3.1 vor dem Verguss um den Zapfen 2.1 angeordnet. Durch diese Anordnung wird das Gießvolumen des Vergussbereichs 2.5, also das Volumen, in welches die Vergussmasse 5 vergossen wird, reduziert, weshalb möglichen Lufteinschlüssen entgegengewirkt werden kann. Insbesondere können so verschlossene Hohlräume aus Luft vermieden werden. Auch kann einer Umorientierung und/oder einem Aufschwimmen des Transponders 3 während des Vergießens entgegengewirkt werden, was zusätzlich das Ausbilden von Lufteinschlüssen begünstigen würde.

Darüber hinaus wird bei weniger Gießvolumen auch weniger Vergussmasse 5 benötigt. Hierdurch können die Kosten reduziert werden. Zudem kann der Gießprozess schneller durchgeführt werden.

Zum Vergießen des Transponders 3 mit dem Gehäuse 2 wird die zunächst flüssige Vergussmasse 5 durch die Öffnung 2.3 eingegossen. Die Vergussmasse 5 läuft in den Vergussbereich 2.5 und benetzt den Transponder 3 vollständig. Die Vergussmasse 5 dient als Schutz für den Transponder 3. Insbesondere kann sich je nach Geometrie der Transponderkappe 1 ergeben, dass das Vergießen durch Kapillarwirkung unterstützt wird. Auf eine Evakuierung der Vergussmasse 5 nach dem Vergießen kann verzichtet werden, da Lufteinschlüsse und insbesondere abgekapselte Hohlräume in der Vergussmasse 5 von vornherein vermieden werden. Auch kann auf eine Erhöhung der Viskosität der Vergussmasse 5 durch Temperatursteigerungen und/oder Verdünnung verzichtet werden. Hierdurch kann eine Zeitersparnis bei dem Herstellprozess, insbesondere dem Vergussprozess, der Transponderkappe 1 erreicht werden. Nach dem Verguss erstarrt die Vergussmasse 5. Der Transponder 3 ist mit dem Gehäuse 2 vergossen.

Der Zapfen 2.1 verhindert während des Vergussvorgangs, dass Lufteinschlüsse in der Vergussmasse 5 die Füllhöhe H2 negativ beeinflussen, indem beispielsweise verschlossene, gekapselte Hohlräume vermieden werden können. Dies ermöglicht die vollständige Füllung des Gießvolumens mit Vergussmasse 5, weshalb eine sehr genaue Höhe H2 erreichbar ist.

Die Transponderkappe 1 weist zweckgemäß zur Kennzeichnung des Werkzeugs 100 äußerst kleine Abmaße auf. So beträgt der Außendurchmesser DA des Gehäuses 2 zwischen 1,5 mm und 4 mm und die Innenhöhe H des Gehäuses 2 zwischen 3 mm und 6 mm. Hiervon abweichende Abmaße sind jedoch ebenso möglich. Aufgrund der geringen Abmaße der Transponderkappe 1 ergibt sich, dass das Volumen der Vergussmasse 5 entsprechend ebenfalls sehr klein ist. Bevorzugt ist bereits ein Tropfen an Vergussmasse 5 ausreichend.

Aufgrund des Zapfens 2.1 können beim Vergießen zufällig große Lufteinschlüsse vermieden werden, weshalb die Höhe H2 des Vergussbereichs 2.5 genau einstellbar ist. Die Höhe H2 kann durch eine vordefinierte Menge, also ein vordefiniertes Volumen oder eine vordefinierte Masse, an Vergussmasse 5 gleichbleibend und sehr genau eingestellt werden. Die aufgrund der Abmaße der Transponderkappe 1 ebenfalls geringe Höhe H2 muss daher während des Vergießens nicht überprüft werden, weshalb auf aufwendige Messverfahren verzichtet werden kann. Der Prüfaufwand kann damit reduziert werden. Aufgrund der Ausgestaltung der erfindungsgemäßen Transponderkappe 1 können somit sehr geringe Fertigungstoleranzen, insbesondere bezüglich der Höhen H1 und H2, präzise eingehalten werden. Ausschussware kann daher bei der Fertigung der Transponderkappe 1 vorgebeugt werden. Über den Zapfen kann die Spule mit im Verhältnis zur Vergussmasse und Gehäuse gesehen höherer Dichte zentriert werden, wodurch eine Unwucht der Transponderkappe vermieden wird.

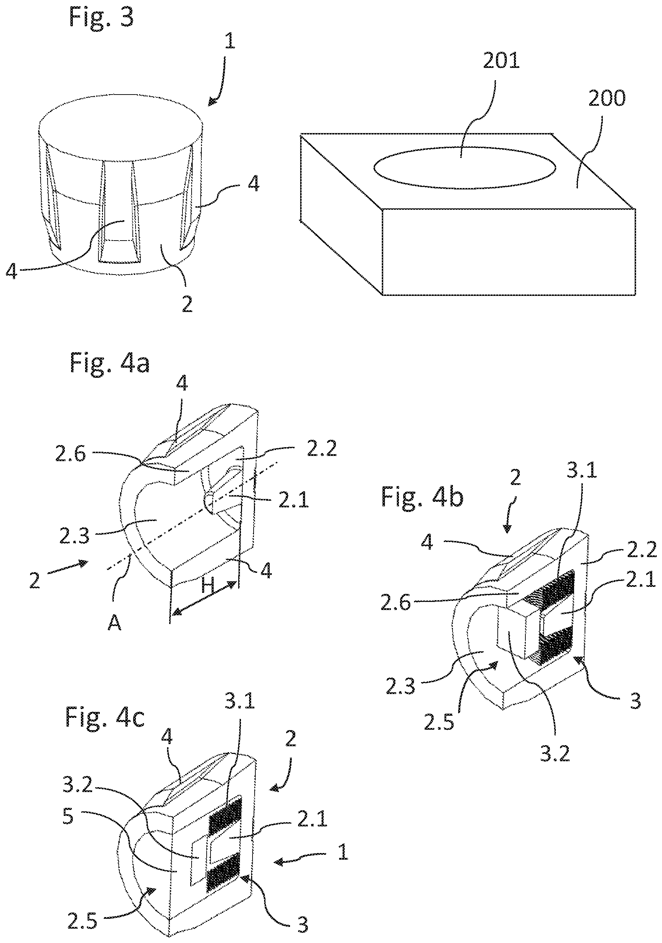

In der Fig. 3 ist ein weiteres Ausführungsbeispiel einer Transponderkappe 1 dargestellt. Die hier dargestellte Transponderkappe 1 ähnelt dabei größtenteils dem zuvor beschriebenen Ausführungsbeispiel gemäß der Fig. 1 bis 2d, weshalb nachfolgend insbesondere auf die Unterschiede zwischen beiden Ausführungsbeispielen der erfindungsgemäßen Transponderkappen 1 eingegangen werden wird. Es gelten die zuvor im Zusammenhang mit dem ersten Ausführungsbeispiel genannten Vorteile.

Die Transponderkappe 1 eignet sich zur Befestigung eines Transponders 3 an einem Objekt, wie beispielsweise einer Platte 200, indem diese in einer Bohrung 201 des Objekts angeordnet wird. Das Objekt kann beispielsweise aus metallischen Materialien, wie Edelstahl oder Buntmetall oder Legierungen, oder aus nicht metallischen Materialien, wie Kunststoff, Glas, Holz oder Faserwerkstoffen, sein.

Zur Befestigung des Transponders 3 wird die als Plug ausgestaltete Transponderkappe 1 in die Bohrung 201 eingesteckt, insbesondere eingedrückt, eingepresst und/oder eingeschlagen. Zusätzlich oder alternativ kann die Transponderkappe 1 in die Bohrung 201 eingeklebt werden. Die Transponderkappe 1 kann sich auch zur Befestigung eines Transponders 3 an von der Platte 200 abweichend ausgestalteten Objekten eignen, wie beispielsweise rotationssymmetrischen Objekten, Objekten kleiner Dimensionen usw.

Die Transponderkappe 1 weist zur Anordnung in der Bohrung 201 äußere Rippen 4 auf, welche an der Mantelfläche des Gehäuses 2 angeordnet sind. Sobald die Transponderkappe 1 in der Bohrung 201 angeordnet ist, verklemmen die Rippen 4 mit der Platte 200, wodurch die Transponderkappe 1 in dem Objekt gehalten wird. Es ist ebenso möglich, die Transponderkappe 1 ohne Rippen 4 auszugestalten. Bei einer derartigen Ausgestaltung ist es ferner denkbar, dass die Transponderkappe 1 rotationssymmetrisch ausgestaltet wird. Insbesondere bei der Anordnung der Transponderkappe 1 an rotationssymmetrischen Objekten kann so die Rotationssymmetrie des gekennzeichneten Objekts beibehalten werden. Ein Zapfen 2.1, wie im Zusammenhang mit den Fig. 4a bis 4c noch detaillierter beschrieben, dient der mittigen Ausrichtung des Transponders 3, insbesondere der Transponderspule 3.1 sowie des Integrierten Schaltkreises 3.2.

Die Rippen 4 erstrecken sich in axialer Richtung der Mantelfläche eines Gehäuses 2. Ferner sind die Rippen 4 in Umfangsrichtung gleichmäßig angeordnet. Die Transponderkappe 1 weist insgesamt fünf Rippen 4 auf, wobei auch eine abweichende Anzahl an Rippen 4, beispielsweise weniger oder mehr als fünf, möglich ist. Auf der Stirnseite des Gehäuses 2 kann ein Schriftzug angeordnet werden, weshalb diese beispielsweise als Werbefläche und/oder zur Identifikation des Herstellers der Transponderkappe 1 dienen kann.

Das Gehäuse 2 ist gemäß Fig. 3 im Wesentlichen zylindrisch ausgestaltet, wobei in der Darstellung zum oberen Bereich des Gehäuses 2 hin eine Verdickung vorgesehen ist. Die Verdickung kann eine zusätzliche Klemmwirkung der Transponderkappe 1 in der Bohrung 201 ermöglichen. Ferner kann der verjüngte untere Bereich des Gehäuses 2, also die verjüngte Unterseite, eine einfachere Anordnung, insbesondere eine einfachere Einbringung, der Transponderkappe 1 in der Bohrung 201 ermöglichen. Optional kann das Gehäuse 2 keine Verjüngung aufweisen.

Zur Befestigung der Transponderkappe 1 wird zunächst das zu kennzeichnende Objekt, beispielsweise die Platte 200, mit einer zu der Transponderkappe 1 korrespondierenden Bohrung 201 versehen. Alternativ ist es auch möglich, eine bereits vorhandene Bohrung 201 zu nutzen. Die Bohrung 201 ist hierbei derart zu dimensionieren, dass der Durchmesser und/oder die Tiefe der Bohrung mit der äußeren Gestalt des Gehäuses 2 der Transponderkappe 1, insbesondere dem Außendurchmesser DA und der Innenhöhe H, korrespondiert. Die Bohrung 201 kann als Durchgangs- oder als Sacklochbohrung ausgestaltet sein. Optional kann die Bohrung 201 eine Umlauffase zur vereinfachten Montage der Transponderkappe 1 aufweisen.

Die Transponderkappe 1 wird anschließend in die Bohrung 201 eingebracht, indem diese in das Bohrloch eingesteckt und/oder eingedrückt und/oder eingeschlagen und/oder eingepresst wird. Alternativ oder zusätzlich ist es auch möglich, die Transponderkappe 1 in der Bohrung 201 zu verkleben. Die Rippen 4 sind derart ausgestaltet, dass nach dem Eindrücken und/oder Einstecken der Transponderkappe 1 in die Bohrung, diese eine gewisse Presswirkung in der Bohrung erreichen. Die Transponderkappe 1 wird durch diese Presswirkung in der Bohrung 201 gehalten. Sobald die Transponderkappe 1 in der Bohrung 201 eingebracht ist, ist es möglich, dass das Gehäuse 2, insbesondere aber die Stirnfläche des Gehäuses 2, mit einer Oberfläche des gekennzeichneten Objektes fluchtet.

In den Fig. 4a bis 4c ist die Transponderkappe 1 gemäß Fig. 3 als Schnittdarstellung abgebildet. Das Gehäuse 2 weist den Zapfen 2.1 zur Anordnung des Transponders 3, insbesondere der Transponderspule 3.1, auf. Der Zapfen 2.1 ist kegelförmig ausgestaltet. Das Gehäuse 2 weist ferner einen Boden 2.2, eine gegenüberliegende Öffnung 2.3 und einen Mantel 2.6 auf.

Der Transponder 3 weist eine Transponderspule 3.1, insbesondere eine kernlose Luftspule, auf. Die Transponderspule 3.1 ist an dem Zapfen 2.1 angeordnet. Die Transponderspule 3.1 kann auf dem Boden 2.2 aufliegen. Zusätzlich oder alternativ kann ein integrierter Schaltkreis 3.2 des Transponders 3 auf dem Zapfen 2.1 aufliegen.

Der Transponder 3 ist gemäß Fig. 4c mit Vergussmasse 5 fest mit dem Gehäuse 2 vergossen. Die Vergussmasse 5 füllt hierbei den Hohlraum innerhalb des Gehäuses 2 vollständig aus. Der Vergussbereich 2.5 der Transponderkappe 1 erstreckt sich daher über die gesamte Innenhöhe H des Gehäuses 2. Alternativ ist es denkbar, dass sich der Vergussbereich 2.5 nur über einen Teil der Innenhöhe H des Gehäuses 2 erstreckt. Insbesondere kann ein Befestigungsbereich 2.4 vorgesehen sein.

Die erfindungsgemäße Transponderkappe 1 zur Befestigung eines Transponders 3 an einem Objekt mit einem Gehäuse 2 und einem mit dem Gehäuse 2 vergossenen Transponder 3 mit Transponderspule 3.1, bei welcher die Transponderspule 3.1 um einen Zapfen 2.1 des Gehäuses 2 angeordnet ist, zeichnet sich durch besonders geringe Fertigungstoleranzen aus. Durch die Anordnung der Transponderspule 3.1 um den Zapfen, können Lufteinschlüsse während des Vergussvorgangs verhindert werden, weshalb besonders kleine Abmaße der Transponderkappe 1 gefertigt werden können. Hierdurch eignet sich die Transponderkappe 1 auch zur Kennzeichnung von Objekten, bei denen der Platz zur Kennzeichnung stark eingeschränkt ist.

### Bezugszeichen:

- 1: Transponderkappe
- 2: Gehäuse
- 2.1: Zapfen
- 2.2: Boden
- 2.3: Öffnung
- 2.4: Befestigungsbereich
- 2.5: Vergussbereich
- 2.6: Mantel
- 3: Transponder
- 3.1: Transponderspule
- 3.2: Integrierter Schaltkreis
- 4: Rippen
- 5: Vergussmasse

- 100: Rotierbares Werkzeug
- 101: Werkzeugende
- 200: Platte
- 201: Bohrung

- A: Hauptachse
- DI: Innendurchmesser
- DA: Außendurchmesser
- H: Innenhöhe
- H1: Höhe (vergussfreie Höhe)
- H2: Höhe (Vergusshöhe)
- H3: Außenhöhe

## Patentansprüche

1. Transponderkappe zur Befestigung eines Transponders (3) an einem Objekt, mit einem Gehäuse (2) und einem mit dem Gehäuse (2) vergossenen Transponder (3) mit Transponderspule (3.1),
**dadurch gekennzeichnet,**
**dass** das als Gießform ausgestaltete Gehäuse (2) als einseitig offener Hohlzylinder ausgestaltet ist,
wobei die Transponderspule (3.1) um einen an einem Boden (2.2) des Gehäuses (2) angeordneten Zapfen (2.1) des Gehäuses (2) angeordnet und auf den Zapfen (2.1) aufgesteckt ist und
wobei das Gehäuse (2) und der Zapfen (2.1) als Teil des Gehäuses (2) aus Kunststoff gefertigt sind.

2. Transponderkappe nach einem der vorhergehenden Ansprüche,
**dadurch gekennzeichnet, dass** das Gehäuse (2) um eine Hauptachse (A) rotationssymmetrisch ausgestaltet ist.

3. Transponderkappe nach einem der vorhergehenden Ansprüche,
**dadurch gekennzeichnet, dass** das Gehäuse (2) einstückig ausgestaltet ist.

4. Transponderkappe nach einem der vorhergehenden Ansprüche,
**dadurch gekennzeichnet, dass** das Gehäuse (2) einen Befestigungsbereich (2.4) und/oder einen Vergussbereich (2.5) aufweist.

5. Transponderkappe nach einem der vorhergehenden Ansprüche,
**dadurch gekennzeichnet, dass** der Zapfen (2.1) kegelförmig ausgestaltet ist.

6. Transponderkappe nach einem der Ansprüche 2 bis 5, **dadurch gekennzeichnet, dass** der Zapfen (2.1) zur Zentrierung der Transponderspule (3.1) im Gehäuse (2) koaxial zur Hauptachse (A) des Gehäuses angeordnet ist.

7. Transponderkappe nach Anspruch 6, **dadurch gekennzeichnet, dass** eine Vergussmasse (5) sich nur zum Teil über eine Höhe (H) des Gehäuses (2) erstreckt.

8. Werkzeug zum rotierenden Bearbeiten mit einem Werkzeugende (101),
**gekennzeichnet durch**
eine Transponderkappe nach einem der Ansprüche 1 bis 7.

9. Werkzeug nach Anspruch 8, **gekennzeichnet durch** eine aufgesteckte oder aufgeschraubte oder eingesteckte oder eingeschraubte Transponderkappe (1).

10. Verfahren zur Herstellung einer Transponderkappe (1) mit einem Gehäuse (2) und einem Transponder (3) mit Transponderspule (3.1), welcher mit dem Gehäuse (2) vergossen wird,
**dadurch gekennzeichnet,**
**dass** das als Gießform ausgestaltete Gehäuse (2) als einseitig offener Hohlzylinder ausgestaltet ist,
wobei die Transponderspule (3.1) vor dem Vergießen um einen an einem Boden (2.2) des Gehäuses (2) angeordneten Zapfen (2.1) des Gehäuses (2) angeordnet und auf den Zapfen (2.1) aufgesteckt wird und
wobei das Gehäuse (2) und der Zapfen (2.1) als Teil des Gehäuses (2) aus Kunststoff gefertigt sind.

11. Verfahren nach Anspruch 10, **dadurch gekennzeichnet, dass** die Transponderkappe (1) nach einem der Ansprüche 2 bis 7 ausgebildet ist.

## Claims

1. Transponder cap for fastening a transponder (3) to an object, comprising a housing (2) and a transponder (3) with a transponder coil (3.1), the transponder (3) being encapsulated in the housing (2),
**characterized in that**
the housing (2), configured as a casting mold, is configured as a hollow cylinder open on one side, wherein the transponder coil (3.1) is arranged around a pin (2.1) of the housing (2) arranged on a bottom (2.2) of the housing (2) and is fitted onto the pin (2.1), and wherein the housing (2) and the pin (2.1), as part of the housing (2), are made of plastic.

2. Transponder cap according to any one of the preceding claims, **characterized in that** the housing (2) is configured to be rotationally symmetrical about a main axis (A).

3. Transponder cap according to any one of the preceding claims, **characterized in that** the housing (2) is configured in one piece.

4. Transponder cap according to any one of the preceding claims, **characterized in that** the housing (2) has a fastening region (2.4) and/or a encapsulation region (2.5).

5. Transponder cap according to any one of the preceding claims, **characterized in that** the pin (2.1) is configured to be conical.

6. Transponder cap according to any one of claims 2 to 5, **characterized in that** the pin (2.1) for centering the transponder coil (3.1) in the housing (2) is arranged coaxially with the main axis (A) of the housing.

7. Transponder cap according to claim 6, **characterized in that** a potting compound (5) extends only partially over a height (H) of the housing (2).

8. Tool for rotary machining having a tool end (101), **characterized by** a transponder cap according to any one of claims 1 to 7.

9. Tool according to claim 8, **characterized by** a transponder cap (1) that is fitted onto or screwed onto or inserted into or screwed into the tool.

10. Method for manufacturing a transponder cap (1) having a housing (2) and a transponder (3) with a transponder coil (3.1), the transponder (3) being potted in the housing (2), **characterized in that** the housing (2), configured as a casting mould, is configured as a hollow cylinder open on one side, wherein the transponder coil (3.1), before potting, is arranged around a pin (2.1) of the housing (2) arranged on a bottom (2.2) of the housing (2) and is fitted onto the pin (2.1), and wherein the housing (2) and the pin (2.1), as part of the housing (2), are made of plastic.

11. Method according to claim 10, **characterized in that** the transponder cap (1) is configured according to one of claims 2 to 7.

## Revendications

1. Capuchon de transpondeur destiné à fixer un transpondeur (3) à un objet, comprenant un boîtier (2) et un transpondeur (3), pourvu d'une bobine de transpondeur (3.1), qui est enrobé avec le boîtier (2),
**caractérisé en ce**
**que** le boîtier (2), réalisé sous la forme d'un moule de coulée, est configuré comme un cylindre creux ouvert d'un côté,
la bobine de transpondeur (3.1) étant disposée autour d'un tenon (2.1) du boîtier (2) disposé sur un fond (2.2) du boîtier (2.1) et étant enfichée sur le tenon (2) et le boîtier (2) et le tenon (2.1) étant fabriqués en matière plastique en tant que partie intégrante du boîtier (2).

2. Capuchon de transpondeur selon l'une des revendications précédentes, **caractérisé en ce que** le boîtier (2) est configuré à symétrie de révolution autour d'un axe principal (A).

3. Capuchon de transpondeur selon l'une des revendications précédentes, **caractérisé en ce que** le boîtier (2) est configuré d'une seule pièce.

4. Capuchon de transpondeur selon l'une des revendications précédentes, **caractérisé en ce que** le boîtier (2) présente une zone de fixation (2.4) et/ou une zone d'enrobage (2.5).

5. Capuchon de transpondeur selon l'une des revendications précédentes, **caractérisé en ce que** le tenon (2.1) est de configuration conique.

6. Capuchon de transpondeur selon l'une des revendications 2 à 5, **caractérisé en ce que** le tenon (2.1) destiné au centrage de la bobine de transpondeur (3.1) dans le boîtier (2) est disposé de manière coaxiale par rapport à l'axe principal (A) du boîtier.

7. Capuchon de transpondeur selon la revendication 6, **caractérisé en ce qu'**une masse d'enrobage (5) ne s'étend que partiellement sur une hauteur (H) du boîtier (2).

8. Outil destiné à l'usinage rotatif avec une extrémité d'outil (101),
**caractérisé par**
un capuchon de transpondeur selon l'une des revendications 1 à 7.

9. Outil selon la revendication 8, **caractérisé par** un capuchon de transpondeur (1) qui est emboîté ou vissé sur celui-ci ou inséré ou vissé dans celui-ci.

10. Procédé de fabrication d'un capuchon de transpondeur (1) comprenant un boîtier (2) et un transpondeur (3), pourvu d'une bobine de transpondeur (3.1), qui est enrobé dans le boîtier (2),
**caractérisé en ce**
**que** le boîtier (2), réalisé sous la forme d'un moule de coulée, est configuré comme un cylindre creux ouvert d'un côté,
la bobine de transpondeur (3.1), avant l'enrobage, étant disposée autour d'un tenon (2.1) du boîtier (2) disposé sur un fond (2.2) du boîtier (2.1) et étant enfichée sur le tenon (2) et
le boîtier (2) et le tenon (2.1) étant fabriqués en matière plastique en tant que partie intégrante du boîtier (2).

11. Procédé selon la revendication 10, **caractérisé en ce que** le capuchon de transpondeur (1) est configuré selon l'une des revendications 2 à 7.
